# FASCICULE DE BREVET EUROPEEN

(11) **EP 1 880 348 B1**
(45) Date de publication et mention de la délivrance du brevet: **24.08.2011**
(21) Numéro de dépôt: 06709263.5
(22) Date de dépôt: 07.02.2006
(51) Int. Cl.: G06K 19/06

(54) **PROCEDE DE CODAGE DE L'INFORMATION DE FACON DUALE SUR SUPPORTS PHYSIQUES ET SOUS FORME INFORMATIQUE DOTEM**
VERFAHREN ZUR DUALEN CODIERUNG VON INFORMATIONEN AUF PHYSISCHEN MEDIEN IN EINEM COMPUTERISIERTEN FORMAT (DOTEM)
METHOD FOR TE DUAL CODING OF INFORMATION ON PHYSICAL MEDIA IN A COMPUTERISED FORMAT (DOTEM)

(30) Priorité: 16.02.2005 FR 0501552
(43) Date de publication de la demande: 23.01.2008
(73) Titulaire: ALPHACODE, 78114 Magny les Hameaux (FR)
(72) Inventeur: RIVAILLIER, Jacques, F-78114 Magny-les-Hameaux (FR)
(74) Mandataire: Novagraaf Technologies
(86) Numéro de dépôt international: PCT/FR2006/000275
(87) Numéro de publication internationale: WO 2006/087446

(56) Documents cités:
- WO-A-03/025847

## Description

### I -INTRODUCTION

On connaît de nombreux procédés de représentation de l'information sous forme digitale, notamment, les codes à caractères tels les codes barres et les codes messages comme les codes 2D. Seuls ces derniers permettent de coder l'octet (256 valeurs) et de représenter un fichier informatique. On connaît également le code à caractères Dote dont chaque caractère peut coder 1024 valeurs soit l'équivalent de 4 octets.

Le procédé DOTEM que nous présentons est une amélioration du procédé DOTE®, brevets français n° 00 06411 et PCT n° 0102889 publié le 27 mars 2003 avec le numéro WO 03/025847 A1 du même inventeur, qu'il complète et développe.

### II- PRÉSENTATION

En informatique, toutes les informations sont finalement codées sous forme d'octets qui ont chacun une valeur comprise entre 0 et 255.

Le procédé DOTEM fait correspondre à chacune de ces valeurs une structure particulière ou caractère. L'ensemble de ces caractères sont regroupés sous forme d'alphabets comportant chacun plusieurs polices de caractères.

L'originalité de l'invention réside dans la construction de la structure de ces représentations et les propriétés qui en découlent.

La représentation DOTEM est du type 2D (l'information est codée sur les 2 dimensions, x et y), à la différence de celle des codes à caractères à 1 dimension comme les codes barres. Chaque octet est représenté, dans le procédé DOTEM, par une structure spécifique qui est indépendante de la taille et du contenu du fichier, contrairement à la grande majorité des codes bidimensionnels (2D) qui représentent chaque ensemble d'information par une structure graphique globale spécifique où il n'y a pas de caractères. Ce sont des codes « globaux » à la différence de la présente conception qui est « alphabétique », donc ouverte.

Le but du procédé DOTEM est :
- de représenter les fichiers informatiques , partiellement ou en totalité, conjointement sur support physique quelconque, et sous forme informatique, en mémoire et sur réseau ;
- de simplifier les codages et conventions de formatage par des caractères de valeur supérieures à l'octet et/ou représentant des variables complexes;
- d'accroître la sécurité de traitement (autocontrôle au niveau du caractère).

Ce but est atteint par un procéde de codage selon la revendication 1.

### Définitions.

**Alphabet DoteM:** ensemble regroupant les polices ou fontes de caractères de même dimension, c'est-à-dire de même nombre de colonnes. Chaque alphabet comporte différentes polices de caractères physiques. Elles sont de structure géométrique particulière portant sur la constitution de l'en-tête et éventuellement du pied de caractère.
**Dot :** surface élémentaire d'information généralement binaire sur un support physique quelconque ;
**Dot mixte :** dot constitué d'un demi dot généralement noir et d'un demi dot sans impression (fond blanc). Généralement les dots mixtes de l'en-tête sont noir/blanc et ceux de pied sont blanc/noir.
**Bit :** élément d'information binaire informatique correspondant au dot physique;
**Colonnes :** suite de dots sur un support physique, exemple papier ;
**Byte :** suite de 8 bits ou caractère informatique ;
**Définition des caractères :** elle précise le nombre de colonnes ou de bytes composant le caractère. Les caractères DOTEM sont composés d'au moins 2 colonnes ou octet (bytes). Le nombre de colonnes ou octets n'est pas limitatif. Les caractères sont regroupés en alphabets généralement suivant leur nombre de colonnes (ou d'octets).
**Caractères physiques :** structure composée de colonnes de dots de 2 types :
   - les dots de détection-repérage indispensables à la localisation des caractères sur support physique. Leurs variantes donnent lieu à des polices différentes. Ils n'ont pas de correspondant un informatique.
   - les dots de valeur qui servent à coder le « poids » du caractère (0 à 1023 pour l'alphabet 2 colonnes). Ils codent l'information générale. Chaque dot de valeur correspond à 1 bit informatique.
**Caractères informatiques :** structure le plus souvent de 8 bits ou octet (byte) toujours binaires;
**Tête de colonne :** dot noir ou dot mixte, ce dernier est composé d'un demi dot noir et d'un demi dot blanc ;
**Pied de colonne :** dernier dot généralement mixte de la colonne. Il détermine le plus souvent la première colonne d'un caractère physique ;
**En-tête de caractère :** ensemble de dots noirs généralement alterné de dots mixtes chapeautant le corps des caractères physiques ;
**Pied de caractère** en partie basse des caractères physiques en dehors des dots codant l'information et qui seuls correspondent à des bits des caractères informatiques. L'existence de pied de caractère est facultative et dépend de la police.
**Corps de colonne :** partie de colonne hors en-tête et éventuellement pied de caractère dont les dots correspondent directement aux bits de l'octet de même structure;
**Richesse ou pouvoir de représentation d'un caractère :** c'est la possibilité du caractère de pouvoir représenter un nombre de valeurs différentes. Un octet peut prendre 256 valeurs différentes. Un caractère DOTEM à 2 colonnes peut en représenter 1024, à 3 colonnes 16384 etc...
**Balise ou tag ou index :** ce sont les caractères dont la valeur dépasse 255 (valeur max. de l'octet), utilisés notamment pour délimiter et qualifier les champs.

***Le procédé DOTEM est basé sur l'association et la mise en oeuvre originales des concepts suivants :***

### 1- Concept d'alphabet.

Définition de l'alphabet en général : système de signes (lettres) servant à la transcription d'une langue.

Ici langue peut correspondre à un domaine d'application. A la différence des codes barres ou des codes 2D, cette notion d'alphabet confère au procédé DOTEM une très grande souplesse aux spécificités des différentes applications. Les caractères ou structures regroupés en alphabets peuvent quantifier une ou plusieurs variables spécifiques propres au domaine, définissant ainsi des variables complexes quelconques (par analogie aux nombres complexes).

Une suite de tels caractères permet de décrire des ensembles de données multiples et leur contexte à la manière des mots et phrases d'une langue.

Par ailleurs, la gestion de la sécurité à l'aide de redondance est libre et accepte tout concept pour s'adapter plus efficacement aux contraintes des applications parfois contradictoires. L'utilisateur garde toute liberté dans sa mise en oeuvre.

La représentation peut être linéaire ou non sans limitation de taille. Sur un document, l'écriture peut être faite sur un bord en horizontal ou en vertical., ainsi que sur toute la longueur d'un objet en continu (papier ou pièce de tissu....).

### 2- Généralisation du concept de caractère.

Chaque caractère de DOTEM a son dual ou « doublure » en informatique. Un caractère sur support physique dit « **caractère physique** » a son dual en mémoire ou sur réseau dit « **cararactère informatique** ».

### Exemple :

1 caractère formé de dots sur papier correspond à 1 octet formé de bits en machine. Pour les dots de valeur qui seuls supportent l'information utile :
1dot noir = 1 bit « 1 » et 1 dot blanc = 1 bit « 0 ».
Cette correspondance bi-univoque simplifie les logiciels d'interface.

D'autre part la taille des caractères et leur espacement sur support physique est totalement libre. L'écriture peut se faire ligne par ligne de dimension quelconque avec un interligne également quelconque.

### 3- Notion de structure spécifique des caractères.

Les caractères DOTEM possèdent une structure spécifique qui leurs confèrent les propriétés suivantes :
➢ possibilité de détection quelle que soit leur position dans un flux de données ou sur un support physique. La structure des colonnes ou octet est imbriquée (voir le chapitre structure des principaux alphabets). Cette structure particulière, liant plusieurs colonnes ou octets, permet de distinguer un caractère DOTEM au milieu d'autres informations. Plus la définition est grande plus le pouvoir de discrimination est élevé.
➢ possibilité de détecter des erreurs de lecture et d'en corriger certaines au niveau du caractère. Les colonnes ou bytes de contrôle ont pour but de vérifier la cohérence de la structure du caractère. Voir le chapitre structure des principaux alphabets.
➢ possibilité de reconnaître l'orientation de chaque caractère dans le plan pour les supports physiques. Cette propriété est assurée par l'en-tête et éventuellement le pied de caractère ; voir le paragraphe structure des principaux alphabets.
➢ Transparence complète vis à vis des traitements informatiques tels que compression, chiffrement ou incrustation et les procédés d'autocorrection, comme les CRC, Reed Salomon etc, qui s'ajoutent à ceux au niveau de chaque caractère....
➢ Amélioration de l'efficacité de chiffrement puisque les 256 valeurs d'un octet peuvent être convertis en 1024 (ou plus) valeurs indépendantes.

### Remarque :

Le procédé DOTEM met en oeuvre plusieurs alphabets suivant la définition des caractères.

Le nombre de dots par colonne est variable par principe. Il est préférable de limiter le nombre de dots de valeur à 8 pour simplifier la correspondance avec les octets. Toutefois afin de s'adapter aux contraintes de certaines applications (par exemple supports déformables) les caractères physiques peuvent se composer de colonnes de tailles supérieures notamment de tête et pied de caractère avec ou sans dot mixte.

### 4- Notion de richesse ou pouvoir de représentation des caractères.

La structure de chaque caractère permet de détecter automatiquement sa définition de 2, 3, 4,.... colonnes ou octets. Chaque colonne ou octet contient un dot ou un bit qui signale si la colonne ou l'octet suivant appartient ou non au caractère (propriété de liaison).

Le nombre de valeurs et leur grandeur, potentiellement représentés par un caractère dépend de sa définition (2 colonnes ou plus).

### Exemple :

1 car. 2 **colonnes** ou 2 octets peut représenter **1024** valeurs (10 bits en col 2+1)
1 caractère DOTEM **3 colonnes** possède 2 codages différents :
   1. codage de 2 valeurs indépendantes de maximum :
      **1024** sur 10 bits (col. 2 + 1) et **16** sur 4 bits (col.3) ;
   2. Codage d'une valeur sur : 2 (col.1) + **8** (col.2) + 4(col3) liées = 14 bits soit → **16384** (valeurs par caractère).
1 caractère DOTEM **4 colonnes** possède 3 codages différents :
   1. 3 valeurs indépendantes **:1024** (col.1 + 2) + **16** (col. 3) + **16** (col.4) ou
   2. 2 valeurs indépendantes : **1024** (col 1 + 2) + **256** (col.3 + 4)
   3. 1 valeur pour les 4 col. liées : 2 (col.1) + 8 (col.2) + 4 (col3) + 4 (col4) = 18 bits soit → **262144** (valeurs par caractère).

### III- STRUCTURES DES PRINCIPAUX ENSEMBLES DE CARACTÈRES OU ALPHABETS.

### 1- Généralités

Si les car. informatiques sont accessibles directement par leur adresse, les car. physiques doivent être retrouvés dans un plan. Ces derniers doivent posséder, en plus des car. informatiques, une structure permettant de les détecter et de retrouver leur orientation dans le plan. Pour se faire, ils possèdent tous une en-tête et parfois un pied en plus de leur corps proprement dit. Ce dernier est identiques pour les 2 types de car. où chaque dot physique a son correspondant en bit informatique. Les dots physiques peuvent être de formes pleines quelconques mais tous semblables (cercles, carrés, rectangles, ellipses...) et les colonnes peuvent être jointives ou non.

### 1-1- Structures des en-têtes des caractères physiques.

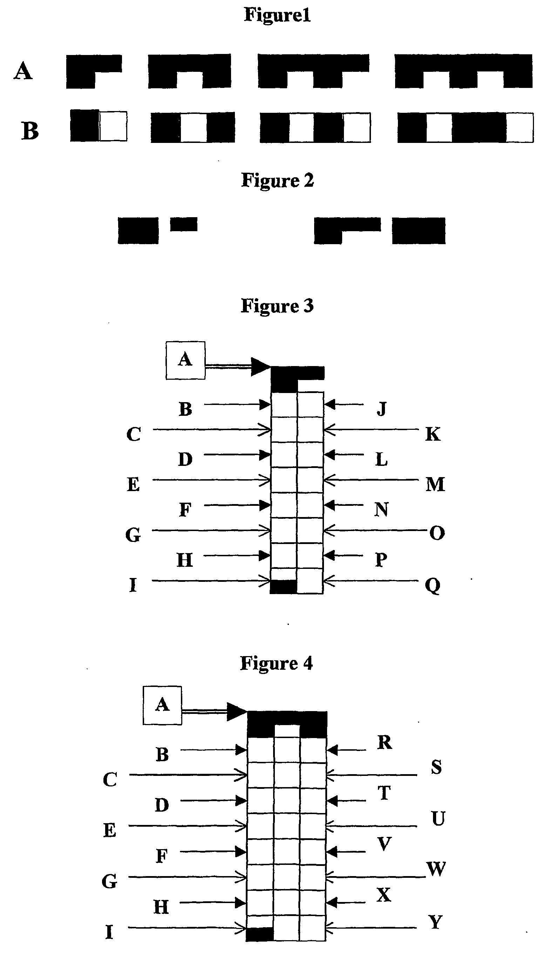

Celles-ci dépendent de la définition du caractère, c'est-à-dire du nombre de colonnes qui le constitue. Elle gagne a être périodique (exemple : fig. 1A, planche 1) et constituée d'une succession de dots entiers (généralement noirs) et de dots mixtes ou d'absence de dot (fond blanc = « dot blanc »), figure 1B. Elle commence par 1 dot (noir) suivi d'un dot mixte ou d'un « dot blanc » puis 1 dot (noir) ainsi de suite pour composer une ligne crénelée servant à détecter la rangée de caractères et à effectuer la séparation des colonnes. Elle sert également à corriger l'horizontalité ou l'orientation de la rangée ainsi que l'orientation des caractères.

Le pas horizontal du crénelage peut être quelconque et les dots séparés par des inter-colonnes de valeur également quelconque (fig. 2).

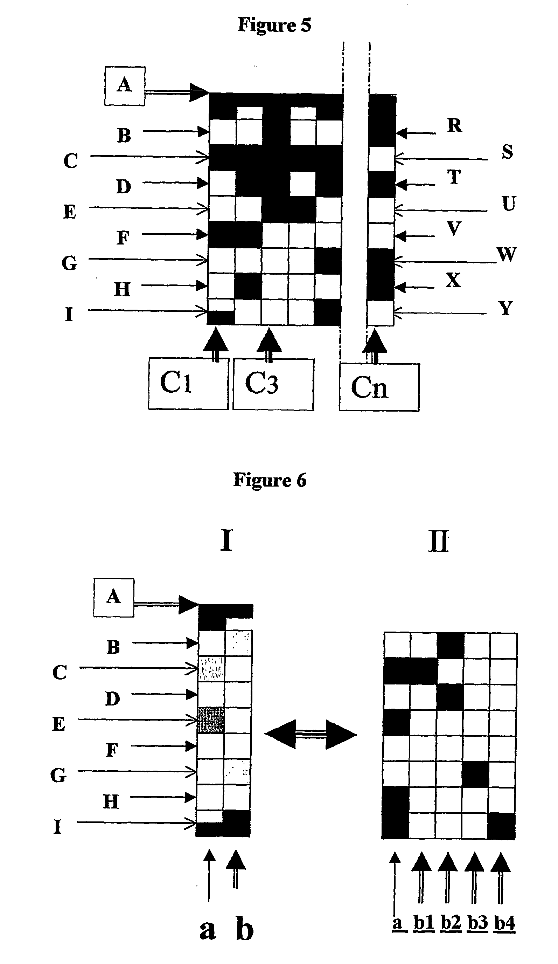

Dans certains cas (fig.6) il est intéressant de remplacer les dots noirs de l'en-tête par des dots gris suffisamment foncés pour être facilement détectés lors d'une analyse multiniveaux afin d'accroître les possibilités de codage.

### Remarque :

Les dots mixtes n'exigent pas forcément une définition double de celle requise pour analyser les dots entiers. En effet, il n'est pas nécessaire de mesurer le demi dot mais seulement de détecter la présence d'un dot plus petit. Ceci revient à introduire de l'information supplémentaire en se contentant d'une définition moindre.

Toutefois certaines conditions applicatives ne permettent pas cette utilisation. C'est le cas notamment des supports froissables. Les dots mixtes sont alors remplacés par des dots normaux ou l'absence de dot et les colonnes sont généralement allongées d'un ou plusieurs dots.

### 1-2- Structures des têtes et pieds de colonnes des caractères physiques.

La tête de colonne est la partie de fen-tête de car. qui chapeaute la colonne.

La tête de la première colonne (n° impair) est un dot (noir), celle de la seconde colonne (n° paire) est de préférence un dot mixte (blanc/noir) et ainsi de suite pour les caractères à plus de 2 colonnes.

Toutefois les demi dots peuvent être remplacés par une absence de dot « dot blanc » ou encore un dot (noir) suivant le dessin de la police. Ce dernier cas est utilisé notamment pour réaliser une ligne (noire) tout au long de la rangée de caractères alors détectable comme une même composante connexe.

Le pied de la première colonne (ou dernier dot) est de préférence formé d'un dot mixte mais il peut comporter 1 ou plusieurs dots (noirs) pour les polices répondant à des conditions d'utilisation particulières. Le pied permet de caractériser la première colonne (début du caractère) et de déterminer la base du caractère physique.

Remarque : le bit 2⁷ est égal à 1 dans le 1^{er} octet du caractère informatique.

### 1-3- Structures des corps des colonnes des caractères physiques ou des octets.

La structure du corps des colonnes (ou octets) est particulière pour chacune des colonnes jusqu'à la définition 3 colonnes, elle gagne ensuite à être périodique.

Chaque caractère possède une colonne (octet) dite de valeur qui code les 256 valeurs de l'octet et d'au moins une colonne (ou octet) dite de contrôle-extension qui permet d'entrelacer les colonnes (ou octets), de détecter des erreurs de lecture, de corriger certaines erreurs et d'étendre le codage des valeurs. Dans le corps des colonnes (caractère physique) chaque dot correspond à 1 bit (caractère informatique) et réciproquement.

### 2-Caractères de définition 2 colonnes (ou 2 octets). PLANCHE 1.

Les colonnes et les octets étant identiques dot à bit, seules les colonnes seront décrites.

### 2-1- Structure de la première colonne.

Les dots sont repérés Fig.3. planche 1.

La tête de colonne est désignée par la partie de **A** au-dessus de la colonne (1 dot noir).

L'ensemble des dots **B** à **I** en dessous constitue le corps de la colonne. Il est constitué de 8 dots de préférence jointifs et de même dimension.

Le premier dot **B** du corps sert à détecter une erreur éventuelle sur cette colonne. Il représente la parité impaire du nombre de dots noirs. Le nombre total, hors pied et tête est donc toujours pair.

Les dots 2, 3, 4 **(C, D, E** fig.3) servent à contrôler la structure de la colonne 2.

Le dot **C** est noir (bit 2 = 1) si le nombre de dots noirs de la col.2 est pair.

Le dot **D** est noir (bit 3 = 1) si le nombre de segments noirs de la col.2 est pair.

Le dot **E** est noir (bit 4 = 1) si le dot J de la col.2 est noir (bit correspondant =1).

Les dots 6 et 7 **(G, H)** permettent une extension à 2¹⁰ de la codification des valeurs du caractère. Les dots **G** = 2⁸ et **H** = 2 ⁹ s'ils sont noirs.

Le dot 5 **(F)** renseigne sur l'extension ou non de la définition à 3 colonnes.

Si **F** est noir le caractère n'a que 2 colonnes, s'il est blanc la troisième colonne fait partie du même caractère.

Quand les dots sont pondérés, le poids le plus faible commence à partir de l'en-tête.

### 2-2- Structure de la seconde colonne.

La tête de colonne est illustrée par la partie **A** figure 3 planchelau-dessus de la colonne. Elle est de préférence d'un des types de la figure 1 Planche1.

Les dots suivants constituent le corps de la colonne. Ils sont pondérés de 2⁰ (**J**) à 2⁷ (**Q**) Ils servent à coder les 256 valeurs de l'octet.

### 3- Caractères de définition 3 colonnes (ou 3 octets).

Les deux premières colonnes ont la même structure que celles du caractère à 2 colonnes.

La troisième est représentée Fig.4. Elle se présente comme suit :

Le premier dot **R** sert à détecter une erreur éventuelle sur cette colonne. Il représente la parité impaire du nombre de dots noirs. Ce dernier est donc toujours pair.

Le dot **S** indique si la colonne suivant appartient ou non au même caractère.

Le dot **T** est noir (bit 3 = 1) si le nombre de segments noirs de la col.1 est pair.

Le dot **U** est noir (bit 4 = 1) si les dots **V, W, X, Y** représente l'extension du codage de la colonne 1 (bit correspondant =1). Il est blanc pour indiquer que la valeur codée est indépendante (0 à 15 à l'aide des 4 dots V, W, X, Y),

Les dots 5, 6, 7 et 8 **(V, W, X, Y)** permettent une extension de la codification des valeurs du caractère ou une valeur indépendante. Ces dots sont pondérés, le poids le plus faible commence à partir de l'en-tête, ici le dot **V.**

### 4-Caractères de définition supérieure à 3 colonnes (ou > 3 octets) : PLANCHE 2

Il est recommandé de reprendre la structure du caractère 3 colonnes décrite précédemment et de la compléter par des colonnes du même type que la colonne n° 3 en nombre suffisant pour représenter les informations selon la forme souhaitée. Elles peuvent être indépendantes ou liées de façon quelconque. La fig. 5 représente un exemple d'un caractère à plus de 6 colonnes. Les 4 premières sont liées pour accroître la valeur codée, la cinquième est indépendante ...

Toutefois, les colonnes au-delà de la troisième peuvent être différentes, mais le dot d'extension de la définition doit rester le dot 2 du corps et respecter la convention noir (ou 1) pour la fin du caractère et blanc (ou 0) pour la lier la colonne suivante.

### IV- DÉVELOPPEMENT DES POSSIBILITÉS DE REPRÉSENTATION DES INFORMATIONS À L'AIDE DES CARACTÈRES DOTEM.

### 1- Généralités

Les caractères DOTEM permettent l'encapsulation d'informations en nombre et valeurs non limitatifs.

Un caractère est constitué au minimum de 2 colonnes ou 2 octets mais ce nombre n'est pas limité.

Il peut alors représenter des informations dans un ou plusieurs formats plus ou moins complexe.

En effet, les colonnes 3 et plus, peuvent être indépendantes et représenter chacune 16 valeurs. Elles peuvent être liées en nombre quelconque pour représenter des valeurs élevées ou indépendantes pour représenter des données complexe avec plusieurs champs.

Le procédé DOTEM permet la représentation d'informations complexes de plusieurs façons qui peuvent être panachées.
- La première consiste à utiliser des caractères simples par exemple à 2 colonnes avec des valeurs > 255 pour représenter des « tags » ou « balises » qui déterminent des champs spécifiques de données, suivis d'autant de caractères (ou données) que nécessaire dans les champs.
- La seconde consiste à composer un alphabet propre au domaine applicatif dont les caractères représentent des variables multiples mais génériques qui seront associées comme les lettres d'un mot pour représenter une information complexe.

Si les caractères sont bien élaborés, l'écriture sera plus évidente, rapide et concise.

### 2- Liaisons avec d'autres structures.

Dans les alphabets classiques la notion de crénage lie 2 caractères, de façon analogue plusieurs caractères DOTEM peuvent être liés. En effet, si le début du caractère suivant intervient alors que le codage du précédent prévoit la suite du même caractère (dot 5), cela signifie que les 2 caractères possèdent une propriété commune ou que le couple ainsi formé exprime une information particulière.

Le nombre de caractères consécutifs ainsi liés n'est pas limitatif.

### Exemple :

Ce procédé permet de coder un champ isolé de longueur variable et inconnue à priori.
Le champ est qualifié par un tag (ou balise) et tous les caractères constitutifs sont ainsi liés entre eux jusqu'au dernier, déterminant automatiquement la longueur du champ.

### 3- Dots non binaires.

La réalisation de structures (ou caractères) sur support physique comme un document se fait généralement en noir et blanc. L'usage de la couleur permet des effets esthétiques qui peuvent être développés avec les structures DOTEM, mais les couleurs augmentent aussi le pouvoir de codage de l'information.

Les différentes couleurs peuvent être remplacées par n nuances de gris. La lecture risque toutefois de se révéler plus délicate.

Ainsi, un dot de structure physique peut représenter plusieurs bits d'une structure informatique : un caractère physique de p colonnes (sur papier par exemple) peut représenter plus de p octets en mémoire.

### Exemple :

Pour n=4 (noir, rouge, vert, bleu) on obtient un doublement des octets correspondant à une colonne (fig. 6 Planche 2) 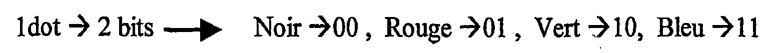 Les caractères informatiques sont toujours binaires.

### 4- Représentations de fonctionnalités.

Des fonctionnalités peuvent être traitées par l'association et la pondération de variables appropriées à l'application au sein du caractère.

### 5- Cas particuliers, exemple de caractères anti-effacement.

Pour lutter contre la fraude qui consiste à effacer les informations d'identification et d'authentification, un type de caractère spécifique est élaboré de telle manière que la 1^{ère} colonne (1" octet) soit codée différemment des caractères précédents. Notamment les dots ou bits 2, 3, et 4 sont codés à l'opposé. Il ne sera pas reconnu comme caractère DOTEM et déclenchera une erreur, mais indiquera qu'il s'agit d'un caractère de type anti-effacement. Les colonnes 3 et suivantes représentent le nombre de caractères sécurisés du texte ou fichier permettant la détection du nombre de caractères effacés.

Une autre façon de traiter ce problème consiste à qualifier un tag pour cette fonction par exemple 1023, le ou les caractères suivant indiquant le nombre de caractères sécurisés liés ; ceci permet de vérifier le nombre de caractères éventuellement effacés dans la zone protégée.

### PRÉSENTATION D'APPLICATIONS

### 1- Généralités.

Certains domaines gagnent à définir un alphabet spécifique. Le procédé DOTEM permet de construire des caractères très riches contenant des information multiples, par exemple :

Les 2 premières colonnes codes 1024 valeurs correspondant chacune à un numéro de caractère (1024 caractères), les colonnes suivantes peuvent coder des valeurs de variables particulières au domaine. Le nombre de variables ainsi que leur valeur limite ne sont pas limitatifs. Les caractères possèdent alors le nombre adéquat de colonnes. La succession de caractères ainsi formés, auxquels on peut donner un nom pour plus de commodité, permettent de représenter sous forme condensée et avec une grande souplesse un grand nombre « d'objets » complexes.

Ce concept permet le cas échéant de construire une sémantique particulière et des règles d'utilisation à la manière d'une langue.

### 2- Application au domaine sonore.

Dans ce domaine il est intéressant de définir au moins un ensemble de caractères codant plusieurs variables associées mais de valeur indépendante pour s'adapter aux besoins.

Il convient de procéder à la définition des structures ou caractères répondant le mieux à la problématique. Ils devront, par exemple, représenter : une valeur binaire d'identification physique et informatique, une fréquence et une durée d'exécution sonore, éventuellement un niveau sonore.

Il peut être ajouté d'autres variables exprimées, sur documents ou en informatique, ou lors d'une restitution sonore etc...Le caractère se compose de plus en plus de colonnes au fur et à mesure qu'il représente de plus en plus d'informations qu'il encapsule.

Il est important de juger s'il n'est pas préférable d'augmenter le nombre de caractères au sein d'un alphabet ou éventuellement de créer un autre alphabet plutôt que d'alourdir de trop la définition des caractères. Chaque cas présente un optimum.

Remarque 1 : Dans cet exemple, il y a plusieurs façons de coder les informations. La première utilise des fréquences et durées définies dans des gammes pré-établies pour réduire le nombre de colonnes des caractères.

L'autre précise directement les données dans leur unité comme la fréquence en Hz et la durée en ms. Les caractères sont plus volumineux mais les gammes ou tables sont inutiles.

La façon 1 consiste en :
- un identifiant à chaque caractère (de 0 à 1023) auquel on peut donner un nom ; cet identifiant est codé sur les col.1 et 2 (10 bits).
- une variable représentant une fréquence correspondante à partir d'une gamme de 16 valeurs codées en col. 3 (indépendante).
- une variable représentant une durée correspondante à partir d'une gamme de 16 valeurs codées en col. 4 (indépendante).

La définition du caractère est 4 colonnes et sera membre de l'alphabet 1.

La façon 2 consiste en :
- un identifiant à chaque caractère (1024 possibilités) comme précédemment.
- une variable représentant une fréquence exprimée en Hz, codée en col. 3, 4 et 5 (col. liées) de 0 à 16384 Hz.
- une variable représentant une durée exprimée en millisecondes codée en col. 6 et 7 (col. liées) de 0 à 256 ms.

La définition du caractère est 7 colonnes et sera membre de l'alphabet 2.

Remarque 2 : Des parties nettement audibles peuvent être codées par des caractères DOTEM qui comportent en leur sein des données d'identification et d'authentification de telle sorte que leur effacement s'il permet la perte d'identification et d'authentification, dégrade de façon significative l'enregistrement ou la restitution sonore.

La représentation des partitions musicales pourraient également utiliser une construction particulière, notamment en machine.

### 3- Application au domaine chimique

Dans le même esprit les composés chimiques peuvent être représentés de manière condensée et pratique au moyen de caractères spécifiques comme par exemple :

Les 2 premières colonnes pour la valeur de désignation (1024), les 2 ou 3 suivantes pour les 256 corps simples ou produits de base, la suivante pour la concentration, la suivante la proportion dans le mélange etc...

Les formules développées pourraient également être décrites de façon très condensée. **Remarque :** Il peut être utile de définir plusieurs alphabets spécifiques par domaine.

### 4- Application sécurité : identification, authentification (Alphabets de logos, sceaux et de signatures).

La possibilité de coder 1024 valeurs par caractères 2 colonnes permet de disposer en plus des 256 valeurs de l'octet de 768 qui servent principalement à désigner des tags.

Certains peuvent être utilisés pour des fonctionnalités particulières. C'est le cas des caractères « dessin » qui représentent notamment des logos (ou sceaux) et signatures au sein de n'importe quel alphabet. Des alphabets de graphismes peuvent être ainsi crées.

### Propriétés:

Les 2 premières colonnes correspondes aux caractères à 2 colonnes, mais les suivantes peuvent être quelconque sans règles de construction. La dernière colonne gagne à comporter au moins 1 dot mixte pour détecter la fin de caractère dessin.

Ces caractères ont pour finalité de représenter directement un dessin particulier formé de dots ou de bits. Ces dessins peuvent ainsi être représentés avec exactitude sur un support physique comme en informatique et peuvent être choisis en fonction du contexte.

Sur support physique, ils sont identifiables à l'oeil et par lecture optique (OCR) comme en machine par logiciel avec la représentation en bits.

Ces propriétés sont mise à profit pour garantir l'identification et l'authentification de textes ou de fichiers.

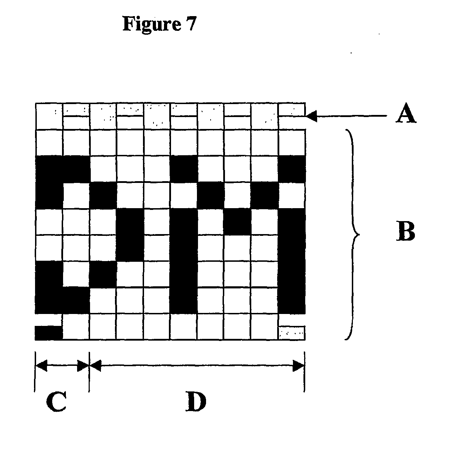

L'exemple fig.7 planche 3 illustre le logo « DM » de DOTEM :

Valeur = 833 ; A=en-tête, B=corps, C= 2 coL standard, D= col. libres.

### REMARQUE : Comparaison des procédés DOTE et DOTEM.

Ce sont tous deux des codes 2D basés sur le concept de l'alphabet. Ils sont composés de colonnes d'élément binaires. Le procédé Dote comporte 2 colonnes dont l'une décrit des paramètres de constitution de la seconde (colonne de valeur) et permet l'extension de la valeur codée et facultativement d'une troisième qui représente le complément de la seconde (redondandance directe)

DoteM comporte un nombre quelconque de colonnes de taille également quelconque, pouvant être automatiquement déterminée et une affectation optimisée sans redondance des paramètres de la colonne de valeur. De plus, toutes les colonnes en nombre quelconque sont liées successivement entre elles et portent l'information du nombre de colonnes et de la liaison éventuelle avec d'autres caractères. Les caractères DOTEM peuvent coder plusieurs variables de diverses dimensions, des dessins, des signatures etc, tout en restant compatibles avec une représentation directe en ordinateur.

Enfin DoteM introduit la notion de dot mixte.

DOTEM correspond à une optimisation et une extension Multicritères de DOTE d'où son nom.

## Revendications

1. Procédé de codage de l'information décrite au moyen d'un ensemble de structures de caractères physiques et de structures informatique, ledit ensemble de structures étant indépendant et composé d'éléments porteurs d'informations, et lesdites structures de caractères physiques comportant au moins une colonne dite de contrôle-extension et une colonne de valeur d'octets, et les structures informatique comprenant des octets et des colonnes agencés de sorte à ce qu'il y ait autant d'octets que de colonnes, les structures de caractères physiques étant définies par au moins deux colonnes avec au moins une des dites colonnes étant de valeur et l'autre de contrôle-extension, ces structures de caractères physiques comportant :
- deux dots réservés à une extension du codage d'une valeur codée par la colonne de valeur ;
- un dot caractérisant la parité du nombre des propres dots noirs desdites structures de caractères physiques ;
- un dot pour la parité du nombre de dots noirs de la colonne valeur ;
- un dot précisant la parité du nombre de segments formés de dots noirs de la colonne de valeur ;
- un dot rappelant l'état du premier dot de la colonne valeur, et
- un dot indiquant :
• si la colonne de valeur est la dernière du caractère, ou
• si une colonne contrôle-extension suivante en fait encore partie,
la colonne de valeur étant formée de dots pondérés en puissance de deux croissant de deux degrés à partir d'une en-tête contrôlant des corps de caractères physiques.

2. Procédé selon la revendication précédente, dans lequel ladite en-tête comporte une succession alternée de dots noirs et de dots mixtes ou d'absence de dots noirs pour constituer une ligne crénelée de pas et de longueur.

3. Procédé selon l'une quelconque des revendications précédentes, dans lequel la première colonne de la structure des caractères physiques possède un dernier dot mixte formé d'un demi dot blanc et d'un demi dot noir.

4. Procédé selon l'une quelconque des revendications précédentes, dans lequel les dots situés le long d'une même colonne des caractères physiques sont de même dimension et variables dans une autre dimension.

5. Procédé selon la revendication précédente, dans lequel les distances entre les colonnes sont nulles.

6. Procédé selon l'une quelconque des revendications précédentes, dans lequel une troisième colonne de caractères de définition trois colonnes comporte :
- un dot caractérisant la parité du nombre de ses dots noirs,
- un dot indiquant si la présente colonne est la dernière du caractère ou si la colonne contrôle-extension suivante fait encore partie de ce caractère,
- un dot exprimant la liaison des propriétés ou l'indépendance avec la colonne de contrôle-extension suivante,
- un dot précisant la parité du nombre de segments de dots noirs de la colonne de contrôle-extension précédente, et
- quatre dots réservés à l'extension du codage de la valeur codée par les colonnes précédentes,
les deux premières colonnes étant identiques à celles des caractères définis sur deux colonnes.

7. Procédé selon la revendication précédente, dans lequel les caractères de définition supérieure à trois colonnes peuvent se composer au-delà de la troisième d'une succession de colonnes élaborées selon les même règles que la troisième colonne.

8. Procédé selon l'une quelconque des revendications précédentes, dans lequel les caractères de définition supérieure à deux colonnes peuvent se composer d'une succession non limitative de colonnes de longueur et de composition quelconque, la dernière comprenant au moins un dot mixte.

9. Procédé selon l'une quelconque des revendications précédentes, dans lequel les dots sont de N couleurs ou de N nuances de gris, et la correspondance du caractère physique avec le caractère informatique est modifiée et transposable à partir des caractères physiques tel qu'une colonne représente M octets successifs avec M=P pour N= 2^{P}.

10. Procédé selon l'une quelconque des revendications précédentes, dans lequel des caractères d'exceptions sont élaborés suivant un codage particulier tel que le codage des dots ou bits sont tous ou en partie à l'opposé de celui des caractères standards.

11. Procédé selon l'une quelconque des revendications précédentes, dans lequel l'en-tête est constituée d'un dot noir et d'un dot mixte de façon qu'une succession de caractères crée une ligne continue transformant une rangée de caractères physiques en une même composante connexe.

## Claims

1. Method of coding information described by means of a set of structures of physical characters and computing structures, the said set of structures being independent and composed of elements carrying information, and the said structures of physical characters including at least one so-called control-extension column and a byte value column, and the computing structures including bytes and columns arranged such that there are as many bytes as there are columns, the physical character structures being defined by at least two columns with at least one of the said columns being a value column and the other a control-extension column, these physical character structures including:
- two dots reserved for an extension of the coding of a value coded by the value column;
- one dot characterising the parity of the number of specific black dots of the said physical character structures;
- one dot for the parity of the number of black dots in the value column;
- one dot indicating the parity of the number of segments formed from black dots in the value column;
- one dot indicating the state of the first dot in the value column, and
- one dot indicating:
• whether the value column is the last of the character, or
• whether a following control-extension column also forms part thereof, the value column being formed by dots weighted to a power of two increasing by two degrees from a header controlling bodies of physical characters.

2. Method according to the preceding claim, **characterised in that** the said header includes an alternating succession of black dots and mixed dots or an absence of black dots to form a crenellated line of a given pitch and length.

3. Method according to any one of the preceding claims, **characterised in that** the first column of the structure of physical characters has a last mixed dot formed from a white half dot and a black half dot.

4. Method according to any one of the preceding claims, **characterised in that** the dots located along the same column of physical characters are of the same dimension and variable in another dimension.

5. Method according to the preceding claim, **characterised in that** the distances between the columns are zero.

6. Method according to any one of the preceding claims, **characterised in that** a third column of the characters of three-column definition includes:
- one dot characterising the parity of the number of its black dots,
- one dot indicating whether the present column is the last of the character or whether the following control-extension column also forms part of this character,
- one dot expressing the linking of the properties or independence with the following control-extension column,
- one dot specifying the parity of the number of segments of black dots in the previous control-extension column, and
- four dots reserved for the extension of the coding of the value coded by the previous columns,
the first two columns being identical to those of the characters defined in two columns.

7. Method according to the preceding claim, **characterised in that** the characters with a definition greater than three columns can be composed beyond the third by a succession of columns produced according to the same rules as the third column.

8. Method according to any one of the preceding claims, **characterised in that** the characters with a definition greater than two columns may be composed of a non-limitative succession of columns of any length and composition, the latter including at least one mixed dot.

9. Method according to any one of the preceding claims, **characterised in that** the dots are or N colours or N shades of grey, and the match between the physical character and the computing character is modified and transposable from the physical characters such that a column represents M successive bytes with M=P for N=2^{P}.

10. Method according to any one of the preceding claims, **characterised in that** exception characters are produced in accordance with a particular coding such that the coding of the dots or bits are all or partly opposite to that of the standard characters.

11. Method according to any one of the preceding claims, **characterised in that** the header consists of a black dot and a mixed dot such that a succession of characters creates a continuous line converting a row of physical characters into one and the same connected component.

## Patentansprüche

1. Verfahren zum Codieren von Informationen, die mit einem Set an physischen Zeichenstrukturen und Rechnerstrukturen beschrieben sind, wobei das Set an Strukturen unabhängig ist und aus Informationsträgerelementen zusammengesetzt ist, und wobei die physischen Zeichenstrukturen zumindest eine sogenannte Steuerungs/Erweiterungs-Spalte und eine Spalte an Bytewerten aufweisen, und wobei die Rechnerstrukturen Bytes und Spalten aufweisen, die derart eingerichtet sind, dass gleich viele Bytes wie Spalten vorliegen, wobei die physischen Zeichenstrukturen durch zumindest zwei Spalten definiert sind, wobei zumindest eine der Spalten einen Wert und die andere eine Steuerung/Erweiterung darstellt, wobei die physischen Zeichenstrukturen aufweisen:
zwei Punkte, die für eine Erweiterung der Codierung eines durch die Wertspalte codierten Werts reserviert sind;
einen Punkt, der die Parität der Anzahl an geeigneten schwarzen Punkten der physischen Zeichenstrukturen darstellt;
einen Punkt für die Parität der Anzahl an schwarzen Punkten der Wertspalte;
einen Punkt, der die Parität der Anzahl an Segmenten spezifiziert, die aus schwarzen Punkten der Wertspalte gebildet sind;
einen Punkt, der den Zustand des ersten Punkts der Wertspalte angibt, und
einen Punkt, der anzeigt:
ob die Wertspalte das letzte Zeichen ist, oder
ob eine folgende Steuerungs/Erweiterungs-Spalte auch dazu gehört, wobei die Wertspalte aus Punkten gebildet ist, die mit einer Potenz von zwei gewichtet ist, die um zwei Grad von einem Kopf aus ansteigt, der die physischen Zeichenelemente steuert.

2. Verfahren nach dem vorstehenden Anspruch, wobei der Kopf eine alternierende Folge von schwarzen Punkten und gemischten Punkten oder ein Nichtvorhandensein von schwarzen Punkten aufweist, um eine gezackte Reihe eines Schritts und einer Länge darzustellen.

3. Verfahren nach einem der vorstehenden Ansprüche, wobei die erste Spalte der physischen Zeichenstruktur einen letzten gemischten Punkt aufweist, der aus einem halbweißen Punkt und einem halbschwarzen Punkt gebildet ist.

4. Verfahren nach einem der vorstehenden Ansprüche, wobei die Punkte, die entlang derselben Spalte der physischen Zeichen liegen, dieselbe Dimension aufweisen und in einer anderen Dimension variabel sind.

5. Verfahren nach einem der vorstehenden Ansprüche, wobei die Entfernungen zwischen den Spalten Null sind.

6. Verfahren nach einem der vorstehenden Ansprüche, wobei eine dritte Zeichenspalte einer Dreispaltendefinition aufweist:
einen Punkt, der die Parität der Anzahl seiner schwarzen Punkte darstellt,
einen Punkt, der anzeigt, ob die vorliegende Spalte die letzte des Zeichens ist, oder ob die folgende Steuerungs/Erweiterungs-Spalte auch zu diesem Zeichen gehört,
einen Punkt, der die Verbindung der Eigenschaften oder die Unabhängigkeit von der folgenden Steuerungs/Erweiterungs-Spalte ausdrückt,
einen Punkt, der die Parität der Anzahl an Segmenten der schwarzen Punkte der vorangehenden Steuerungs/Erweiterungs-Spalte spezifiziert, und
vier Punkte, die für die Erweiterung der Codierung des Werts reserviert sind, der durch die vorangehenden Spalten codiert ist,
wobei die beiden ersten Spalten identisch zu denen der in den beiden Spalten definierten Zeichen sind.

7. Verfahren nach dem vorstehenden Anspruch, wobei sich die Zeichen einer höheren Definition als drei Spalten über die dritte einer Folge von Spalten hinaus zusammensetzen können, die nach denselben Regelen wie die dritte Spalte erstellt sind.

8. Verfahren nach einem der vorstehenden Ansprüche, wobei sich die Zeichen einer höheren Definition als zwei Spalten aus einer nicht begrenzten Folge von Spalten einer Länge und einer beliebigen Zusammensetzung zusammensetzen können, wobei die letzte zumindest einen gemischten Punkt aufweist.

9. Verfahren nach einem der vorstehenden Ansprüche, wobei die Punkte aus N Farben oder N Graunuancen bestehen, und die Entsprechung des physischen Zeichens mit dem Rechnerzeichen modifiziert und umstellbar ist von den physischen Zeichen, so dass eine Spalte M aufeinanderfolgende Bytes mit M=P für N=2^{P} darstellt.

10. Verfahren nach einem der vorstehenden Ansprüche, wobei Ausnahmezeichen erstellt werden, die einer besonderen Kodierung folgen, so dass die Kodierung der Punkte oder Bits insgesamt oder zum Teil jener der Standardzeichen entgegengesetzt ist.

11. Verfahren nach einem der vorstehenden Ansprüche, wobei der Kopf aus einem schwarzen Punkt und einem gemischten Punkt derart zusammengestellt ist, dass eine Folge von Zeichen, die eine kontinuierliche Reihe begründet, eine Reihe an physischen Zeichen in dieselbe verbundene Komponente transformiert.
